# DEMANDE DE BREVET EUROPEEN

(11) **EP 0 944 218 A1**
(43) Date de publication de la demande: **22.09.1999**
(21) Numéro de dépôt: 99200803.7
(22) Date de dépôt: 16.03.1999
(51) Int. Cl.: H04M 1/00, G06F 3/033

(54) **Appareil électronique comportant un écran et procédé pour afficher des graphismes**

(30) Priorité: 20.03.1998 FR 9803466
(71) Demandeur: Koninklijke Philips Electronics N.V., 5621 BA Eindhoven (NL)
(72) Inventeur: Ringot, Nicolas, 75008 Paris (FR)
(74) Mandataire: Chaffraix, Jean

(57) **Abrégé**

Cet appareil comporte un écran (20) sur lequel différents graphismes mobiles (G1,...G8) peuvent apparaître.

Il est muni de moyens pour donner l'illusion que ces graphismes sont placés sur une couronne (50). Par appui sur une touche (K2), les graphismes subissent une rotation selon une flèche (F1 ou F2).

Application aux appareils téléphoniques portables.

## Description

La présente invention concerne un appareil électronique comportant :
- un écran sur lequel une pluralité de graphismes doit être affichée,
- des moyens de défilement pour faire défiler lesdits graphismes.

L'invention concerne aussi un procédé pour afficher des graphismes mis en application dans un tel appareil.

De tels appareils sont bien connus et trouvent de nombreuses applications, notamment dans le domaine des postes téléphoniques portables.

Un problème qui se pose avec de tels appareils, est que l'écran est petit alors qu'il y a une nécessité de plus en plus forte pour que les menus s'enrichissent d'items ou d'icônes.

La présente invention propose un appareil du genre mentionné dans le préambule dans lequel on a prévu des moyens pour faciliter la perception de ces icônes susceptibles d'être affichées.

Pour cela, un tel appareil est remarquable en ce que les moyens de défilement sont formés de moyens pour faire subir une rotation aux graphismes à visualiser.

L' idée de l'invention est de placer les différents graphismes sur une couronne de sorte que l'on profite au maximum de la surface toujours réduite des écrans. Ces graphismes se présentent alors d'une manière décalée, ce qui permet d'en visualiser plus sur un petit écran tout en donnant l'illusion à l'utilisateur que ceux-ci sont bien séparés les uns des autres.

La description suivante, faite en regard des dessins ci-annexés, le tout donné à titre d'exemple non limitatif, fera bien comprendre comment l'invention peut être réalisée.

La figure 1 montre un appareil conforme à l'invention.

La figure 2 montre comment sont affichés les graphismes conformément à l'invention.

La figure 3 montre un schéma de réalisation conforme à l'invention.

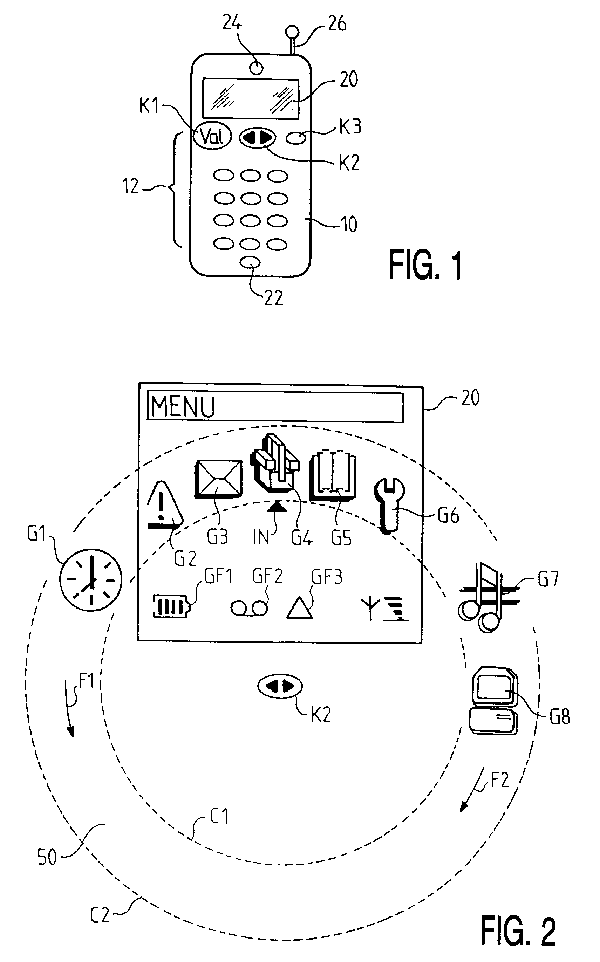

A la figure 1, on a représenté un appareil électronique conforme à l'invention. Dans le cadre de l'exemple décrit, c'est un appareil téléphonique portable pouvant se connecter sur un réseau cellulaire. Il se compose d'un boîtier 10 sur lequel sont disposés différents éléments. Parmi ces éléments, on distingue un clavier 12 comprenant différentes touches K1, K2, K3,..., un écran 20, un microphone 22, un écouteur ou haut-parleur 24 et une antenne 26.

La figure 2 montre l'écran 20 avec d'une part, différents graphismes mobiles ou icônes G1, G2, G3, G4, G5, G6, G7,G8,... susceptibles de se déplacer dans l'écran en utilisant la commande de défilement constituée par la touche K2 et avec, d'autre part, d'autres graphismes GF1, GF2,GF3,...qui sont fixes. On distinguera parmi ces graphismes fixes l'index IN qui, en coïncidence avec un graphisme mobile, permet de l'activer en agissant sur la touche K1 (fig.1).

Selon l'invention les différents graphismes mobiles se déplacent, d'une manière fictive ou virtuelle dans une couronne 50 comprise en deux cercles C1 et C2. Selon que l'on appuie sur une des parties droite ou gauche de la touche K2, les graphismes tournent dans le sens de la flèche F1 pour la partie gauche et dans le sens de la flèche F2 pour la partie droite.

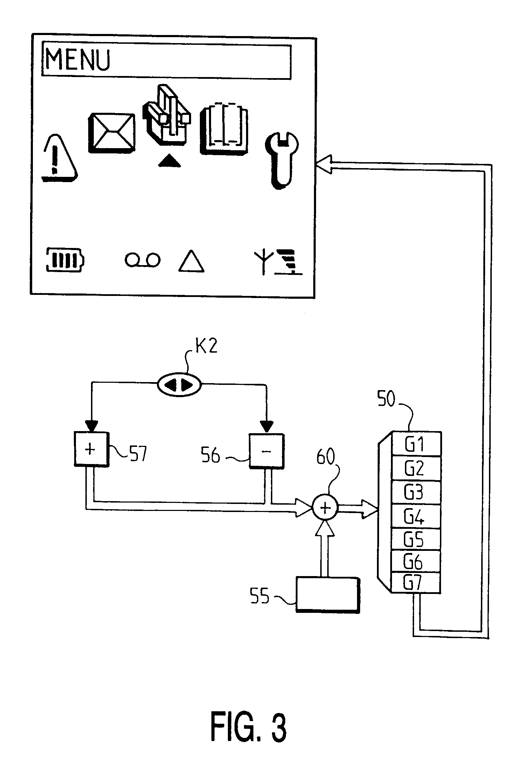

La figure 3 montre un exemple de réalisation de l'invention. Le circuit montré à cette figure est constitué à partir d'une mémoire 50 contenant les informations de tous les graphismes mobiles susceptibles d'être visualisés sur l'écran 20. Chacun de ces graphismes occupe le même nombre d'octets dans cette mémoire et leur adressage est donc séparé d'une quantité fixe d'adressage par rapport au précédent et au suivant. Cette adressage est assuré par un générateur de code d'adressage 55 qui permet de sortir les informations concernant cinq graphismes, ce qui correspond à ce que peut restituer l'écran 20. Cette adressage peut être modifié par des appuis sur la touche K2. Si on appuie sur la partie gauche on diminue l'adressage de ladite quantité d'adressage, si on appuie sur la partie droite, on augmente l'adressage de cette même quantité . Ceci est fait respectivement par les circuits d'incrémentation 56 et de décrémentation 57 Les valeurs fournies par ces circuits 56 et 57 s'accumulent dans un additionneur accumulateur 60 qui finalement adresse la mémoire 50 combinant ces valeurs avec celles fournies par le générateur 55. Les données issues de la mémoire sont donc fournies par séquence de 5 graphismes à l'écran 20. Un contrôleur associé à cet écran range ces séquences dans des emplacements fixés par leur ordre d'apparition.

## Revendications

1. Appareil électronique comportant :
- un écran sur lequel une pluralité de graphismes doit être affichés,
- des moyens de défilement pour faire défiler lesdits graphismes,
caractérisé en ce que les moyens de défilement sont formés de moyens pour faire subir une rotation aux graphismes à visualiser.

2. Appareil électronique selon la revendication 1 caractérisé en ce que l'écran montre une partie des graphismes placés dans une couronne fictive.

3. Appareil électronique selon la revendication 1 ou 2 caractérisé en ce qu'il comporte une touche sur laquelle l'utilisateur agit pour faire la rotation.

4. Appareil électronique selon la revendication 1 ou 2 ou 3 caractérisé en ce que l'écran comporte un index devant lequel chaque graphisme peut être mis en coïncidence.

5. Appareil électronique selon la revendication 4 caractérisé en ce qu'il comporte une touche pour activer et/ou valider le graphisme mis en coïncidence avec ledit index.

6. Procédé pour afficher des graphismes mis en oeuvre dans un appareil muni d'un écran selon l'une des revendications 1 à 4 caractérisé en ce qu'il comporte les étapes suivantes :
- disposition des graphismes sur une couronne fictive,
- affectation d'un certain nombre de graphismes à visualiser en même temps,
- rotation à la demande de l'utilisateur pour faire apparaître les graphisme désirés par l'utilisateur.

7. Procédé pour afficher des graphismes selon la revendication 6 caractérisé en ce qu'il comporte les étapes supplémentaires suivantes :
- mise en coïncidence d'un graphisme avec un index fixe placé sur l'écran
- validation et/ou activation éventuelle dudit graphisme par action sur une touche.
